Europäisches Patentamt

European Patent Office

Office européen des brevets

(19)

(11) Publication number: **0 007 783**
**B1**

(12) **EUROPEAN PATENT SPECIFICATION**

(45) Date of publication of patent specification: **23.02.83**

(51) Int. Cl.³: **C 02 F 3/00, B 01 J 8/20**

(21) Application number: **79301440.8**

(22) Date of filing: **19.07.79**

(54) **Fluidized-bed reactor having excess growth control system.**

(30) Priority: **19.07.78 US 926207**
**06.07.79 US 55149**

(43) Date of publication of application:
**06.02.80 Bulletin 80/3**

(45) Publication of the grant of the patent:
**23.02.83 Bulletin 83/8**

(84) Designated Contracting States:
**AT BE CH DE FR GB IT NL SE**

(56) References cited:
**FR - A - 2 121 715**
**US - A - 3 817 856**
**US - A - 3 855 120**
**US - A - 3 956 129**
**US - A - 4 055 490**

(73) Proprietor: **ECOLOTROL INC.**
**1211 Stewart Avenue**
**Bethpage, New York 11714 (US)**

(72) Inventor: **Hickey, Robert F.**
**284 Locust Street**
**Florence, Mass. O.060 (US)**
Inventor: **Owens, Roger W.**
**130 West 6th Street**
**Deer Park, New York 11729 (US)**

(74) Representative: **Warden, John Christopher et al,**
**R.G.C. Jenkins & Co. 12-15, Fetter Lane**
**London EC4A 1PL (GB)**

Courier Press, Leamington Spa, England.

Fluidized-bed reactor having excess growth control system

This invention relates generally to a fluidized-bed reactor in which waste water or other liquid to be processed is conducted upwardly through a bed of small carrier particles which in the course of operation are enlarged by the growth of cellular material thereon, and more particularly to a system for controlling the accumulation of such material in a fluidized-bed reactor to prevent excessive growth thereof.

The invention will be described in connection with reactors for extracting nitrogen compounds such as nitrate or ammonia from waste water by means of a fluidized bed of solid particles serving as carriers for micro-organisms grown thereof. These reactors are preferably of the type disclosed in the U.S. Patent 3,846,289 and U.S. Patent 4,009,099.

It is to be understood, however, that a system in accordance with the invention is also applicable to other forms of fluidized-bed reactors in which the need exists to control the build-up of bacteria and other types of cellular material on the carrier particles to prevent excessive growth thereof. Thus the invention is useful in connection with the fluidized-bed reactors of the type disclosed in U.S. Patents 4,032,407, 4,009,098 and 4,009,105.

It is now recognised that the existence of nitrogen compounds in waste water represents a serious threat to ecological balances existing in nature. Accelerated eutrophication of lakes and streams is often caused by feeding conventionally-treated waste effluent into surface waters. While such treatment is designed to remove solids and oxygen-demanding organic material, they do not extract from these wastes the substantial quantities of ammonia and nitrate ions which are contained therein and which promote the production of algae.

Aside from being a major nutrient to algae growth, nitrogen in the form of ammonia is toxic to aquatic life and can react with a chlorine disinfectant to form chloramines which are carcinogenic. Hence there is a need for waste water treatment that effects almost complete denitrification; that is, the conversion of nitrate or nitrite compounds to non-polluting elemental nitrogen gas prior to the release of the wastes to surface waters.

The fluidized-bed reactors disclosed in the above-identified U.S. Patents accomplish denitrification by a biological process in which bacteria act to reduce nitrite or nitrate constituents in the influent waste stream into harmless nitrogen gas. This process is carried out in a fluidized-bed reactor in which the waste water to be treated passes upwardly through a bed of small particles, such as activated carbon or sand, at a velocity sufficient to cause motion or fluidization of all of the medium which then functions as a carrier or support surface for the growth of bacteria.

The use of small sand or other particles provides a vast surface area on which the bacteria can flourish and grow, thereby making it possible to remove a considerable amount of contaminants from the waste water in a relatively small reactor volume. Fluidization of the medium augments the effective surface area, compared to that of packed beds, and it minimizes operational problems such as the clogging and head loss encountered in packed beds.

As waste water containing nitrogen in the form of ammonia or nitrate is passed through a fluidized bed, bacterial growth is accelerated and the size of the particles undergoes enlargement. If this growth is unchecked, the bed particles become enlarged to a degree resulting in agglomeration, thereby reducing the biological surface area per unit volume of the reactor and the efficiency of the reactor column. Moreover, as the particles swell, they are reduced in specific gravity and thereby acquire a tendency to float and to be carried away from the bed. Also, when the particles are excessively enlarged, they are prone to entrap or become attached to gas bubbles. This further reduces the specific gravity of the particles and the tendency of the particles to be carried away from the bed.

The primary concern of the present invention is with the removal of excess cellular material or bacterial growth on the particles of a fluidized-bed reactor in the course of operation, thereby obviating the tendency of the particles to be carried away in the process effluent. The term "excess cellular material" as used herein refers to the amount of material attached to the particulate carried beyond that needed for the normal operating of the reactor. In a fluidized-bed reactor for denitrification, sufficient growth in the form of a thin layer of bacteria must be retained on the particles in order to maintain the efficiency of the process. Hence a system which so abrades or shears the particles as to remove all bacterial growth is destructive of the process.

Another concern of the invention is with the control of the thickness of the bio-mass layer on the carrier particles so that an optimum film thickness can be maintained in the biological reactor.

Various techniques have heretofore been proposed to prevent the accumulation of excess cellular material on the carrier particles in a fluidized-bed reactor. One such technique is disclosed in U.S. Patent 4,009,099 wherein the bacterial growth on the particles is monitored as a function of bed expansion. This is accomplished by an optical device or other form of solids sensor, such that when bed expansion reaches a given height to activate the sensor, the bed particles are regenerated by abrasion to remove excessive cellular material.

This is effected mechanically by a stirrer at the top of the column in the form of sharp rotating blades or other means. The partially stripped carrier particles acted upon by the stirrer settle back into the fluidized bed, whereas the sheared-off excess cellular material which has greater buoyancy than the carrier particles is carried away in the effluent process stream.

Since in this prior arrangement, the output of the reactor includes the excess cellular material, it is necessary to use a clarifier or other solids-separation means to remove the sheared solids from the process effluent.

Another approach heretofore taken to control the production of sludge is to permit the growth-covered particles to flow out with the process effluent into a settling tank which separates these particles from the process effluent. The excess growth is then mechanically sheared from the carrier particles, and the mixture of sheared sludge and particles is returned to the fluidized bed. In this technique, a clarifier or other solids separation unit must be used in conjunction with the settling tank to remove the sheared sludge from the process effluent. Alternatively, the sheared growth can be separated from the carrier particles in the return path between the settling tank and the fluidized bed, thereby eliminating the need for a clarifier in the output of the reactor, but requiring instead a separator unit in the return path.

Still another effective approach in current use for removing excess sludge is by means of a vibrating screen. In this technique, the growth-covered particles are pumped from the fluidized bed to the vibrating screen, the pumping action serving to agitate the particles and to shear excess growth therefrom and the vibrating screen functioning to separate the sheared growth from the carrier particles. These particles are then returned to the fluidized bed, whereas the sheared growth is wasted. Alternatively, shearing may be effected by means other than a pump.

The use of a vibrating screen in a growth control system has one important advantage, for it obviates the need for a clarifier in the output of the reactor. On the other hand, a vibrating screen is subject to plugging, and this dictates the use of a washing spray to keep the screen free. This is a serious drawback; for the spray dilutes the concentration of the waste sludge which must be further processed.

Moreover, during the operation of a vibrating screen, some sheared solids remain loosely attached to the carrier particles, and when the carrier particles are turned to the fluidized bed, these solids are brought along and escape into the process effluent, thereby degrading the quality of the effluent when the screen is operative. Furthermore, a vibrating screen, which is a fairly expensive and sophisticated unit, has inherent practical limitations with respect to the amount of liquid it can handle.

In calculating the overall cost of installing and operating an excess growth control system, one must not only take into account the amount of energy that is necessary to shear excess growth from the carrier particles but also the fact that this shearing action directly affects the dewaterability of the resultant sludge. In order to dispose of this sludge, it must first be dewatered. If for example, the abrading technique for shearing the growth tends to dissect the sludge into fine pieces which are then suspended in the water, and are slow to settle, dewatering becomes more difficult.

The nature of the pollutant being removed from the liquid and the type of fluidized-bed process employed for this purpose determines the type of biological organisms which predominate in the treatment system therefor. For a given system, there is an optimum amount of energy which must be imparted to the excess growth shearing means to attain the most dewaterable sludge.

Inasmuch as the handling and disposal of the sludge in a biological treatment facility can represent a substantial percentage of the overall cost of treatment, running as high as 40%, the dewaterability of the excess sludge production directly affects this cost and cannot, therefore, be disregarded; for the more easily dewaterable the sludge, the less expensive is the sludge-handling procedure.

Thus while various techniques and systems based thereon have heretofore been provided to control excess growth in a fluidized-bed reactor, all of these known techniques have entailed clarifiers and other expedients which add substantially to the cost of installing and operating the control systems in a manner yielding an effluent free of sheared material.

The present invention provides a fluidized bed reactor of the type wherein waste water or other liquid to be processed is conducted upwardly therein at a speed conducive to fluidization through a bed of particles which function has a carrier for the growth of the material, a head of effluent being developed above the bed, the reactor comprising a reactor vessel accommodating the bed and having an inlet positioned to feed liquid to be treated to a lower portion of the vessel and an outlet for removing treated liquid from an upper portion of the vessel, characterized by a control system for preventing accumulation of excessive cellular material in the reactor, the control system comprising a separator column positioned within the reactor vessel at least partially above the bed with its lower end extending towards or into the bed, said column having a draw-off port from a position above the bed but below the outlet and extending outside the reactor vessel and means associated with said column to effect shearing of the excess cellular material from the particles to produce in the column a mixture of sheared material and partially stripped carrier particles, whereby the partially stripped particles may be returned to the bed while the sheared material is discharged from the column through the draw-off port.

The reactor of the invention can be made highly efficient, operationally simple and relatively inexpensive. the energy required to shear growth from the carrier particles can be governed to produce a sludge having optimum dewaterability characteristics.

The control exploits the difference in the settling velocities of partially stripped carrier particles and the excess growth sheared therefrom.

As the head of effluent is developed above the bed, the clarified effluent can be discharged from the reactor through a clear-effluent port.

In some embodiments of the invention the column is an open-ended separator column whose lower end extends into the fluidized bed and whose upper end extends above the effluent head. In the course of reactor operation, the cellular material on the particles continues to build up, causing the bed to expand until its level reaches an alarm point indicative of excessive growth. This alarm point is sensed to activate an agitator arrangement which effects shearing of the excess growth from the carrier particles to generate in the separation column a mixture of sheared material and partially-stripped carrier particles.

The separator column is provided with a draw-off port which in operation will be somewhat below the surface of the effluent head. The exit flow rate through the draw-off port may be adjusted to ensure that the upward flow velocity in the separator column is lower than the settling velocity of the carrier particles in the mixture, but higher than that of the sheared material. As a consequence, the sheared material is washed away through the draw-off port, whereas the partially-stripped carrier particles fall back into the fluidized bed. This excess growth removal continues until the level of the bed falls to a predetermined safety point below the alarm point when the activity is discontinued to complete the cycle which is not repeated until the bed again expands to reach the alarm point.

Because the sheared growth is confined to the separator column before being drawn off, none of this material can enter the process effluent stream; hence no need exists for a clarifier in the output line of the fluidized-bed reactor as in prior control systems to provide a clear effluent. In one embodiment, the concentration of the waste sludge emitted from the draw-off port can advantageously be controlled simply by adjusting the exit flow rate from the port. And the amount of energy imparted to the growth shearing activity can be controlled so that optimum sludge dewaterability is obtainable for a given set of operating conditions.

Preferred embodiments of the invention will now be described with reference to the accompanying drawings, wherein:

Fig. 1 schematically illustrates a known form of fluidized bed reactor operating in conjunction with one preferred embodiment of an excess-growth control system in accordance with the invention, the system being shown at the point where its operating cycle is initiated;

Fig. 2 shows the same control system at an intermediate point in the cycle;

Fig. 3 shows the same control system at the completion of its operating cycle;

Fig. 4 shows a second embodiment of a control system in accordance with the invention;

Fig. 5 illustrates a third embodiment of the control system;

Fig. 6 illustrates a fourth embodiment of the invention;

Fig. 7 illustrates a fifth embodiment of the invention;

Fig. 8 illustrates a feature of the invention to be used in combination with the third, fourth and fifth embodiments;

Fig. 9 illustrates a sixth embodiment of the invention in which the entire separator column is located in the head or clear zone above the fluidized bed;

Fig. 10 illustrates a seventh embodiment of the invention;

Fig. 11 illustrates an eighth embodiment of the invention;

Fig. 12 schematically illustrates a known form of fluidized bed reactor operating in conjunction with an excess-growth control system having a separating column in accordance with a preferred embodiment of the invention;

Fig. 13 schematically illustrates a modified version of the separator column of Fig. 12; and

Fig. 14 illustrates a further embodiment of the separator column.

Since an excess-growth control system in accordance with the invention is usable with any known form of fluidized-bed reactor such as the reactor disclosed in U.S. Patent 4,009,099, the reactor structure and its operation will only be briefly outlined.

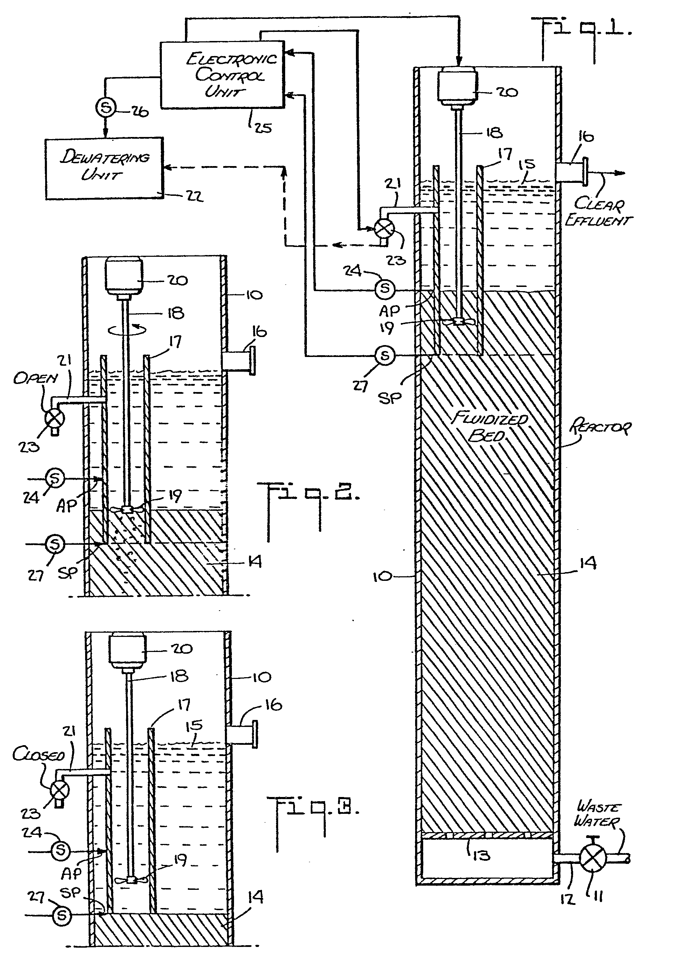

As shown in Fig. 1, waste water or other liquid to be processed is introduced into the cylindrical vessel 10 of the reactor through a valve 11 and inlet pipe 12 feeding the liquid into the lower portion of the column through a manifold 13. Micro-organisms or biota-seeded bed particles of sand or other particular material are fluidized by the passage of the waste water at an appropriate velocity through the reactor column to create a fluidized bed 14.

Developed above the fluidized bed 14 is an effluent head 15 whose level is fixed by a clear-effluent discharge port 16 adjacent the upper end of the reactor. In the course of reactor operation, the cellular material on the particles continues to grow, causing fluidized bed 14 to expand upwardly, this expansion being accompanied by the concurrent contraction of the effluent head 15.

Associated with the fluidized bed reactor is a control system to prevent the accumulation of excessive cellular material, the control system including a relatively small, open-ended separator column 17 immersed in effluent head 15, the low end of the separator column extending into the fluidized bed and the upper end thereof extending above the effluent head.

At a point somewhat below the surface of effluent head 15, separator column 17 is provided with a draw-off port 21 which feeds sheared material washed out of the column into a dewatering unit 22 through a valve 23. This valve is closed when the control system is inactive. Supported on an axle 18 within the lower portion of the separator column is a mixing blade 19 driven by an external motor 20.

As the fluidized bed 14 expands upwardly, its level reaches an alarm point AP indicative of excess cellular material, which condition is detected by a level or solids sensor 24. This sensor may be in electro-optical or any other suitable form adapted to produce a signal when alarm point AP is reached.

The signal from sensor 24 serves to simultaneously activate the mixing motor 20 and to open valve 23 by means of an electronic control unit 25 responsive thereto. In lieu of such automatic control, sensor 24 may be used simply to actuate an alarm pilot light to advise an operator to manually switch on motor 20 and to open valve 23. Or if in a given installation the rate of growth is fairly uniform, the mixing motor 20 and valve 23 of the system may be operated automatically by a timer mechanism.

Mixing blade 19 functions as an agitator or stirrer to shear the coated particles within the lower end portion of the separator column 17 and to generate in the separator column a mixture of sheared material and partially-stripped carrier particles. The extent of shearing is determined by the rotary speed of mixing blade 19, this rate being adjustable to afford the optimum degree of shear for the growth.

As the speed of the mixing motor is advanced, this produces increased agitation and turbulence within the separator column, resulting not only in an enhanced shearing force but also in greater pulverization of the sheared cellular material. Since excessive pulverization of the sheared material adversely affects the dewaterability of this material in dewatering unit 22, an electro-optical particle size sensor 26 may be installed in dewatering unit 22 to provide a signal indicative of the dewaterability index of the pulverized cellular material fed therein.

This index signal is applied to electronic control unit 25 to adjust the speed of motor 20 to an extent maintaining a desired degree of dewaterability. For this purpose, electronic control unit 25 may include a microprocessor programmed to analyze the index signal from sensor 26 and to provide an output signal for effecting the appropriate control of the mixing motor speed.

The upward flow velocity through separator column 17 is determined by the exit flow rate from draw-off port 22 as set by adjustment of valve 23. This exit flow rate is set so that the upward flow velocity in the separator column is higher than the downward settling velocity of the sheared growth, but lower than the downward settling velocity of the partially stripped carrier particles. As a consequence, the sheared cellular material is forced upwardly in the separator column and washed away through draw-off port 21 into the dewatering unit 22, whereas the carrier particles in the mixture fall back into the fluidized bed. In this action, the specific gravity of the coated particles is increased when most of the relatively-light cellular growth attached thereto is sheared off. In addition, by adjusting valve 23, the concentration of the waste sludge can be controlled.

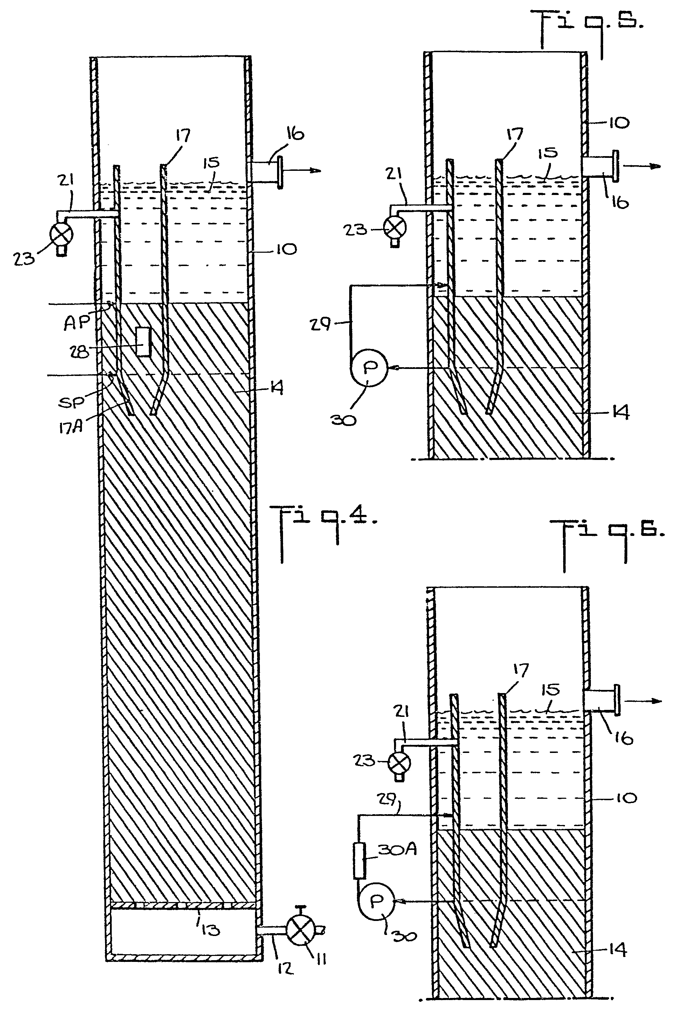

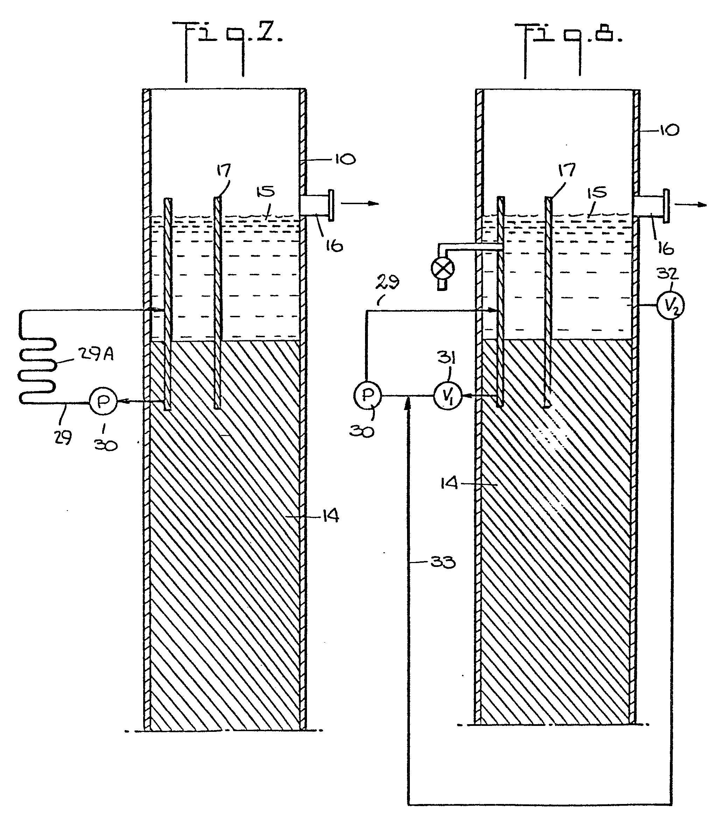

As this activity continues, the size of the particles in the fluidized bed is diminished and the level of the bed, as shown in Fig. 2, gradually drops until a safety point SP is reached, this condition being sensed by a suitable level sensor 27. Sensor 27 generates a signal indicative of this condition which is applied to electronic control unit 25 to deactive mixer motor 20 and to turn off valve 23, as shown in Fig. 3, thereby completing the excess-growth removal cycle. This cycle is not repeated until the level of the fluidized bed 14 again rises as a result of cellular growth, to reach alarm point AP.

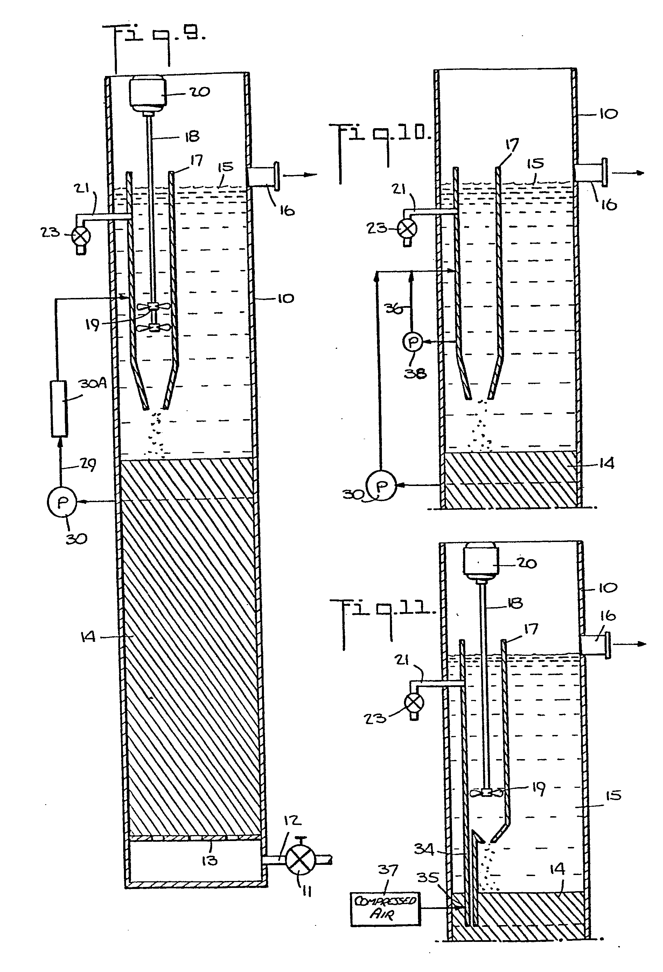

In the embodiment shown in Fig. 4, the agitation arrangement associated with separator column 17 disposed in reactor 10 to effect shearing takes the form of sonic, ultrasonic or infrasonic transducer 28 adapted to impart the necessary shearing force to the coated particles, rather than a mixing blade as in the first embodiment. The transducer for this purpose may be of the type in commercial use for degreasing metal surfaces. However, in the present case, the sonic energy must be such as not to carry out complete removal of the cellular material from the particles but to effect only partial stripping thereof in order not to impair the biological process.

Enhanced results may be obtained by extending the low end of separator column 17 more deeply into fluidized bed 14 or by attaching a conical funnel 17A to the low end of the column to provide extra washing of the sheared growth away from the partially-stripped carrier particles.

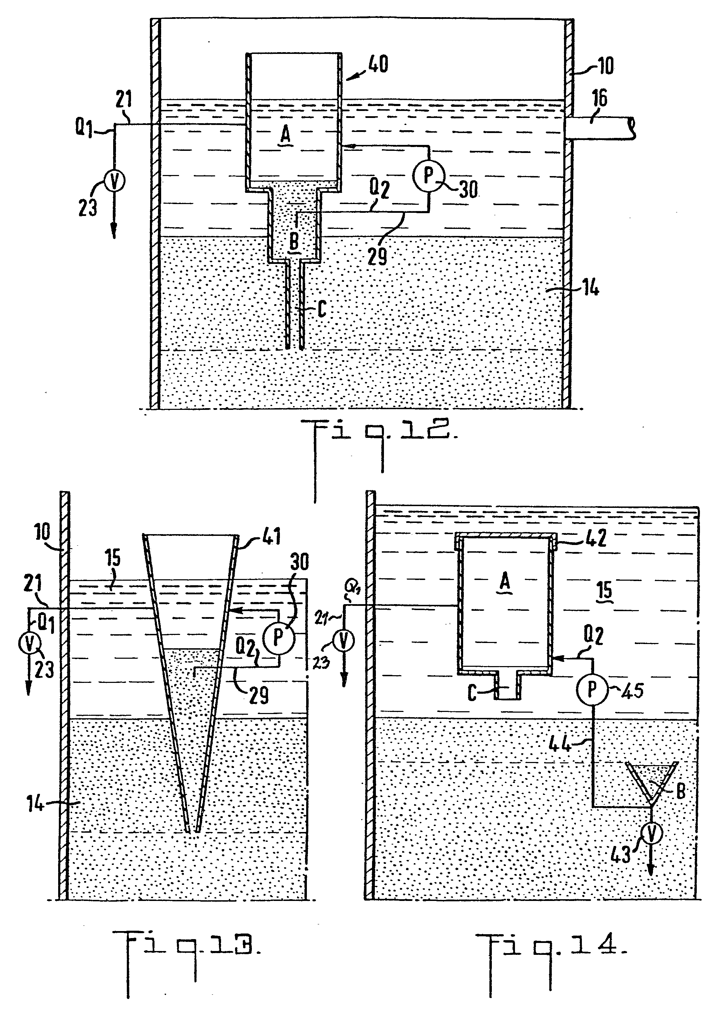

Alternatively, as shown in Fig. 5, the shearing of the cellular growth need not take place within separator column 17 but external to the reactor by means of a loop 29 which includes a pump 30 to draw the coated particles from the column at a point adjacent its low end and to return the particles to the column at a higher point, the pump action providing the necessary agitation or stirring of the particles to effect shearing thereof.

The embodiment shown in Fig. 6 is the same as that in Fig. 5, except that loop 29 associated with separator column 17 further includes a line static mixer 30A to augment the shearing action produced by the pump.

The fifth embodiment shown in Fig. 7 is essentially the same as that shown in Fig. 5, except that draw-off port 21 is not shown and loop 29 associated with separator column 17 is designed to effect hydraulic shear of the excess growth. This may be carried out by section 29A of the loop which affords a constricted or sinuous flow path through which flow is at a high velocity to create sufficient turbulence to produce a shearing action.

In Fig. 8, there is shown a feature that is usable in conjunction with the third, fourth and fifth embodiments of the invention, the growth control system in this instance including a valve 31 in loop 29. Also included is an auxiliary loop 33 having a valve 32 therein and extending between the head or clear zone 15 above the fluidized bed and the section of main loop 29 between valve 31 and pump 30, the auxiliary loop acting to feed clear effluent into the main loop.

When alarm point AP is reached, the sensor detecting this point in the control system serves not only to open valve 23 in the draw-off port 21 of the separator column, but also functions to open valve 31 in the main loop 29 to initiate a shearing action, valve 32 in the auxiliary loop remaining closed during this operation.

When, however, the level of the fluidized bed is reduced by the shearing action to the level of safety point SP, the sensor detecting this point acts to close valve 31 and to open valve 32 in order to feed clear effluent into separator column 17 while pump 30 is kept open, this action serving to flush out the pump and the line to free them of contaminants. This flushing action is continued for a few minutes or as long as is necessary until the system is cleansed, after which the entire system is automatically de-activated and remains in this state until the build-up of cellular material elevates the level of the fluidized bed to re-activate the growth control system.

In the sixth embodiment shown in Fig. 9, the separator column 17 extended into the clear zone or effluent head 15 above fluidized bed 14 has its lower end spaced from the bed rather than immersed therein as in the previous embodiments. In this arrangement, pump 30 in loop 29 serves to deliver fluidized bed particles to separator column 17, shearing of the bio-mass being effected by any of the means previously disclosed.

The flow rate of the sludge exiting separator column 17 through valve 23 must, in this instance, not be significantly lower than the rate of flow at which transfer pump 30 brings the material into the separator column; for otherwise, the sheared growth will back up into the process effluent. While this results in the loss of some flexibility in controlling the concentration of the waste sludge, it has the advantage of simplifying the construction of the separator column in those situations where the clear zone 15 above the fluidized bed is relatively high.

The seventh embodiment illustrated in Fig. 10 is essentially the same as that in Fig. 9, save that a recirculation pump 38 is added to an auxiliary loop 36 extending between the upper end of main loop 29 and a point in column 17 adjacent the lower end thereof, the recirculation pump serving to augment the shearing action produced by transfer pump 30.

In the eighth embodiment illustrated in Fig. 11, the lower end of separator column 17 in the effluent head 15 is again above the level of the fluidized bed 14. In this arrangement, a small vertical pipe 34 is projected down from the lower end of column 17 into the fluidized bed itself. Compressed air from a source 37 is fed into pipe 34 through a lower end port 35 therein, the rising air causing the media to flow into separator column 17 and at the same time providing the necessary shearing action. This shearing action within the column can be augmented by mixing motor 20 as arranged in the first embodiment.

Various other modifications of the above embodiments are envisaged. Thus is in the event the reactor is subject to diurnal flow which brings about variations in the depth of the fluidized bed in the course of the day, the arrangement may be made such that the growth control system is maintained in a quiescent condition except for those periods when excess bed expansion occurs. Or the operations initiated by the alarm point and the safety point sensors may be modified to take into account diurnal variations. Alternatively, one can operate the growth control system continuously rather than intermittently, in which case the rate of growth control is made such as to remove excess growth at about the same rate as growth takes place, so that growth control is never interrupted and the level of the fluidized bed is never permitted to undergo more than slight expansion.

One practical difficulty experienced with the systems of Figs. 1 to 11 is that the operating range of liquid velocity through the separator column is limited. If, therefore, in a given installation, the upward velocity is slightly higher than a predetermined acceptable level, the sand or carrier particles which have been partially sheared may be carried out with the sheared material and pass through the sludge discharge port instead of settling back into the bed.

On the other hand, if the liquid velocity is slightly lower than the predetermined acceptable level, the sludge may back up into the fluidized bed reactor. Since the optimum velocity may vary from plant to plant, this factor creates difficulties in designing the unit for different bacterial processes.

To avoid these difficulties, the shape of the separator column may be modified as shown in Figs. 12 to 14.

The control system of Fig. 12 includes a relatively small, open-ended separator column 40 immersed in effluent head 15, the lower end section C of the separator column extending into the fluidized bed 14 and the upper end section A thereof extending above the effluent head.

At a point somewhat below the surface of effluent heat 15, separator column 40 is provided with a draw-off port 21 which feeds sheared material washed out of the column into a dewatering unit through a valve 23 at a flow $Q_1$. This valve is closed when the control system is inactive. Shearing of the cellular growth is carried out by means of a loop 29 which includes a pump 30 that acts to draw the coated particles at a liquid flow $Q_2$ from the column at an intermediate point therein and to return the particles to the column at a higher point, the pump action providing the necessary agitation or stirring of the particles to effect shearing thereof.

As the fluidized bed expands upwardly, its level reaches an alarm point indicative of excess cellular material, which condition is detected by a level or solids sensor as in the embodiments described above. This sensor may be an electro-optical or any other suitable form adapted to produce a signal when the alarm point is reached. The signal from the sensor serves to simultaneously activate pump 30 and to open valve 23 by means of an electronic control unit response thereto.

The upward flow velocity through column 40 is determined by the exit flow rate $Q_1$ from the draw-off port 21 as set by adjustment of valve 23. In practice, valve 23 may take the form of a controllable pump to adjust this rate to an optimum value. This exit flow rate is set so that the upward flow velocity in the separator column is higher than the downward settling velocity of the sheared growth, but lower than the downward settling velocity of the partially stripped carrier particles. As a consequence, the sheared cellular material is forced upwardly in the separator column and washed away through draw-off port 21 into a dewatering unit, whereas the carrier particles in the mixture fall back into the fluidized bed. In this action, the specific gravity of the coated particles is increased when most of the relatively-light cellular growth attached thereto is sheared off. In addition, by adjusting valve 23 the concentration of the waste sludge can be controlled.

As this activity continues, the size of the particles in the fluidized bed is diminished and the level of the bed gradually drops until a safety point is reached, this condition being sensed by a suitable level sensor which generates a signal indicative of this condition, this signal being applied to the electronic control unit to deactivate shearing pump 30 and to turn off valve 21, thereby completing the excess-growth removal cycle.

As pointed out previously, the problem with separator columns of the types previously known in which the columns are of uniform diameter throughout its length except in some instances at the inlet section, is that the control systems are not capable of operating throughout a broad range of liquid velocities. Hence if the liquid velocity is slightly higher in the column than the desired value, bed particles or sand may be carried out in the sludge discharge, whereas if the velocity is slightly below the desired value, sludge may back up into the reactor.

To overcome this drawback, separator column 40 shown in Fig. 12 has three distinct sections, A, B and C, the upper end section A having a relatively large diameter; the intermediate section having a smaller diameter, and the lower end section which extends into the fluidized bed having the smallest diameter. It will be noted that the loop 29, which includes shearing pump 30, has its inlet going in intermediate section B and its outlet feeding upper end section A.

We shall assume that the intermediate section B is dimensioned for optimum liquid velocity so that the diameter of this section would be the same as a separator column of uniform diameter of the types disclosed in Figs. 1 to 11. If now a condition arises where the liquid velocity becomes slightly higher than the desired value in section B, sand still could not escape from the separator column because the liquid velocity is immediately reduced in the section A thereabove. Conversely, if the liquid velocity is slightly lower than the desired level in section B, it will be higher in lower section C, and this will prevent sludge from flowing back into the reactor.

Thus intermediate section B functions as a sludge concentration section, section A thereabove as the sand safety section, and section C therebelow as the sludge back-up safety section. In this way, the effective operating range is extended and one is able to design the unit for various bacterial processes without danger that in different installations, there will be either sand withdrawal that would deprive the fluidized bed of material or sludge back-up that would contaminate the effluent of the system.

In the arrangement shown in Fig. 13, the separator column 41, instead of being in a stepped formation, as in the case of Fig. 12 with distinct sections, has a conical formation; hence its diameter progressively increases from the lower end to the upper end thereof. Concentration of sludge takes place in the mid-portion of the cone.

With this conical formation, the level at which the material is abraded to separate the excess growth from the fluidized bed particles can be set for optimal conditions, thereby affording maximum waste sludge concentration.

In terms of producing the maximum sludge concentration. the unit shown in Fig. 14 is the most preferred embodiment. In this unit, the separator column 42 has an upper end section A of large diameter and a lower end section C of relatively small diameter, there being no intermediate section as in Fig. 12.

Instead of an intermediate section, the unit is provided with a concentrator section B in a funnel formation which is immersed in the fluidized bed. In practice, the concentrator section may be attached to the interior wall of reactor 10 and resembles a weir or trough. When the growth control system is not activated, solenoid valve 43 remains open allowing the fluidized bed particles to circulate freely through the funnel. When valve 43 is closed, the contents of the funnel are pumped through line 44 by shearing pump 45 into section A of the separator column 42. It should be noted that the funnel could be located in the effluent head and lowered into the bed when needed rather than using a fixed funnel with solenoid valve.

The function of concentrator section B is to allow the fluidized bed particles which rise above its mouth to settle into it. When the control system is activated, the material settled in concentrator section B is then pumped into the separator column. This results in a significantly higher sludge concentration that is achievable by abrading the material in the fluidized state.

Valve 43 in the output end of concentrator section B remains open when the growth control system is not in operation. This permits fluidized bed particles to travel freely through the concentrator section until the growth control system is activated. When, however, the system is activated, solenoid valve 43 is caused to close, thereby permitting fluidized bed particles to settle in the concentrator section B, from which point they are pumped by shearing pump 45 into the upper section A of separator column 42. Thus solenoid valve 43 acts to prevent the media in the reactor from packing in the concentrator section when the separator column is not in operation.

The flow rate $Q_1$ must always be maintained slightly higher than or equal to flow rate $Q_2$, determined by pump 45 at which the sand to be sheared is pumped into section A, or else sludge will back up into the unit. Hence this arrangement is somewhat more difficult to control than the embodiments in Figs. 12 and 13.

In the embodiments shown in Figs. 12 and 13, the open upper end of the separator column is above the surface of the effluent head. In practice, however, the upper end of the columns may be sealed by caps and submerged below the surface, as in Fig. 14, this making possible a more compact separator and one which is easier to support.

In the embodiment in Fig. 14, the concentrator section B may be provided with a density sensor (not shown) to ensure a thick sludge, the sensor acting to activate pump 45 in the agitator arrangement only when the sludge attains a predetermined thickness.

In the embodiment of Figs. 12 and 14, the separator columns have a stepped formation. In practice, it may be desirable to provide a taper rather than abrupt transition between sections of the column so that growth will not then tend to build up on the step ledges and become anaerobic. A taper angle of 30° is sufficient to eliminate solids deposition.

## Claims

1. A fluidized bed reactor of the type wherein waste water or other liquid to be processed is conducted upwardly therein at a speed conducive to fluidization through a bed of particles (14) which function has a carrier for the growth of the material, a head of effluent being developed above the bed, the reactor comprising a reactor vessel (10) accommodating the bed (14) and having an inlet (12) positioned to feed liquid to be treated to a lower portion of the vessel and an outlet (16) for removing treated liquid from an upper portion of the vessel, characterized by a control system for preventing accumulation of excessive cellular material in the reactor, the control system comprising a separator column (17) positioned within the reactor vessel at least partially above the bed (14) with its lower end extending towards or into the bed, said column having a draw-off port (21) from a position above the bed but below the outlet (16) and extending outside the reactor vessel (10) and means (18, 19, 20, 28, 29, 30) associated with said column (17) to effect shearing of the excess cellular material from the particles to produce in the column a mixture of sheared material and partially stripped carrier particles, whereby the partially stripped particles may be returned to the bed (14) while the sheared material is discharged from the column through the draw-off port (21).

2. A reactor according to claim 1 characterized in that the separator column (17) has its upper end extending above the outlet (16).

3. A reactor according to claim 1 or claim 2, characterized in that the means for effecting shearing includes means (25) arranged to activate the shearing process when the expansion of the fluidized bed (14), as a result of said growth, reaches an alarm limit (AP) indicative of excessive growth, to provide an exit flow rate at the draw-off port (21) which results in an upward flow velocity in the separator column that is lower than the settling velocity of the partially-stripped carrier particles but higher than the settling velocity of the sheared material whereby the sheared material is washed away through the draw-off port (10).

4. A reactor according to claim 3, further characterized by means arranged to de-activate said shearing process when the level of said fluidized bed, as a result of the shearing activity, falls to a predetermined safety limit (SP).

5. A reactor according to any preceding claim, characterized in that the lower end of the separator column (17) extends into the fluidized bed (14) itself.

6. A reactor according to any one of claims 1 to 4, characterized in that the lower end of said separator column (17) is located above the fluidized bed (14), and means are provided to transfer the particles from the fluidized bed to the separator column.

7. A reactor according to claim 6, characterized in that said transfer means is arranged to effect said shearing action.

8. A reactor according to claim 7, characterized in that said transfer means includes a main loop (29) including a transfer pump (30) to draw particles from said fluidized bed and to feed said particles to said separator column at a high point.

9. A reactor according to claim 8, further characterized by an auxiliary loop (36) including a second pump (38) arranged to draw particles from adjacent the lower end of said separator column and to feed these particles back to said column at said high point to augment said shearing action.

10. A reactor according to claim 7, characterized in that said transfer means includes a pipe projecting from a point in said column adjacent the low end thereof into the fluidized bed, and means to inject compressed air into said pipe to force particles from said bed through said pipe into said column.

11. A reactor according to any preceding claim, characterized in that the means for effecting shearing is an agitator arrangement comprising a motor-driven mixing blade (19) operating within the lower portion of the separator column (17).

12. A reactor according to any one of claims 1 to 10, characterized in that the means for effecting shearing is an agitator arrangement comprising a transducer (28) disposed in said separator column to produce sonic energy.

13. A reactor according to any one of claims 1 to 10, characterized in that the means for effecting shearing is an agitator arrangement external to said reactor vessel (10) and constituted by a loop (29) having a pump (30) therein to draw the particles coated with cellular material from the column (17) and to return the material to the column.

14. A reactor according to claim 13, characterized in that said loop further includes a line static mixer (30A).

15. A reactor according to claim 13 or claim 14, characterized in that said loop further includes means (29A) to effect hydraulic shearing.

16. A reactor according to claim 13, further characterized by means (32, 33) arranged to inject effluent from a position above the bed (14) into said loop (29), when the system is inactive, to clear said loop.

17. A reactor according to any preceding claim, characterized in that the low end of the separator column (17) has a conical portion (17A).

18. A reactor according to any preceding claim, characterized in that a valve (23) is provided in the draw-off port (21) to adjust the flow rate therethrough.

19. A reactor according to claim 18, characterized in that the valve (23) is normally closed and means are provided simultaneously to open said valve and to active the shearing process when the expansion of the fluidized bed, as a result of growth of cellular material therein, reaches an alarm limit AP indicative of excessive growth, to provide an exit flow rate at the draw-off port which results in an upward flow velocity in the separator column (17) that is lower than the settling velocity of the partially-stripped carrier particles but higher than the settling velocity of the sheared material whereby the sheared material is washed away through the draw-off port; and means arranged to close said valve and simultaneously deactivate the shearing process when the level of the bed, as a result of said shearing, reaches a safety limit (SP) below said alarm limit, thereby completing an excess-growth removal cycle.

20. A reactor according to claim 19, further characterized by a first sensor (24) to produce a signal when said alarm limit is reached and a second sensor (27) to produce a signal when said safety limit is reached, and electronic control means (25) responsive to the signals from the first and second sensors to effect automatically the activation and deactivation of the shearing process and the opening and closing of the valve (23).

21. A reactor according to any preceding claim, characterized in that the draw-off port (21) feeds sheared material to a dewatering unit (22).

22. A reactor according to any preceding claim, characterized in that the lower end of the separator column (40) has a diameter that is smaller than that of the upper end whereby if the upward velocity in the upper end is at a value causing some sheared material as well as carrier particles to settle therein, the velocity in the lower end is at a higher value to prevent back-up of said sheared material into the reactor vessel.

23. A reactor according to claim 22, characterized in that said upper end extends above the level of the outlet (16).

24. A reactor according to claim 22, characterized in that said upper end (A) is capped and lies below the level of the outlet (16).

25. A reactor according to claim 22 or claim 23, characterized in that said separator column (40, 41) further includes a section (B) intermediate said lower end (C) and said upper end (A) and having a diameter of intermediate value.

26. A reactor according to claim 25, characterized in that the means for effecting shearing is constituted by a loop (29) having a pump (30) therein extending between the intermediate section and the upper end of the separator column (40) and arranged to draw carrier particles having excess cellular material from the intermediate section, to shear said particles and to feed the mixture of sheared material and partially-stripped carrier particles into the upper end of the column.

27. A reactor according to claim 25 or claim 26, characterized in that said separator column (40) has a stepped formation to define distinct lower end (C), intermediate (B) and upper end (A) sections.

28. A reactor according to claim 25 or claim 26, characterized in that said separator column (41) has a conical formation of upwardly increasing diameter, the lower portion of which acts as the lower end section, the intermediate portion of which as the intermediate section, and the upper section as the upper end section.

29. A reactor according to any one of claims 22 to 25, further characterized by a concentrator section (B) in a funnel formation immersed in the bed, the shearing means being constituted by a line (44) including a pump (45) arranged to draw carrier particles having excess growth therein which have settled in the concentrator section from the outlet thereof into the upper end section of the separator column.

30. A reactor according to claim 29, further characterized by a valve 43 in the outlet area of the concentrator section (B), which valve is arranged close to when the shearing means is operative and to open when it is not in operation to permit free flow through the concentrator section.

31. A control system according to claim 30, further characterized by a density sensor disposed in said concentrator section and arranged to render said shearing means operative when the sensed density of particles settled in said concentrator section attains a predetermined value.

**Revendications**

1. Réacteur à lit fluidisé, du type dans lequel de l'eau résiduaire, ou un autre liquide à traiter, est dirigée vers le haut à l'intérieur de celui-ci avec une vitesse favorisant la fluidisation à travers un lit de particules (14) qui agit comme un support pour la croissance du matériau, une hauteur d'effluent se formant au-dessus du lit, le réacteur comprenant une enceinte de réacteur (10) recevant le lit (15) et comportant une entrée (12) disposée de manière à fournir le liquide à traiter à une partie inférieure de l'enceinte et une sortie (16) pour évacuer le liquide traité à une partie supérieure de l'enceinte, caractérisé par un système de contrôle pour empêcher une accumulation excessive de matériau cellulaire dans le réacteur, ce système de contrôle comprenant une colonne de séparation (17) placée à l'intérieur de l'enceinte de réacteur, au moins partiellement au-dessus du lit (14), avec son extrémité inférieure s'étendant vers le lit ou à l'intérieur de celui-ci, cette colonne ayant un orifice de purge (21) disposé au-dessus du lit mais en-dessous de la sortie (16) et qui s'étend à l'extérieur de l'enceinte de réacteur (10), et par des moyens (18, 19, 20, 28, 29, 30) associés à ladite colonne (17) pour effectuer la séparation du matériau cellulaire en excès des particules, afin de produire dans la colonne un mélange de matériau séparé et de particules de support partiellement dénudées, de manière que les particules partiellement dénudées puissent être renvoyées dans le lit (14) tandis que le matériau séparé est évacué de la colonne à travers l'orifice de purge (21).

2. Réacteur selon la revendication 1, caractérisé en ce que la colonne de séparation (17) a son extrémité supérieure qui s'étend au-dessus de la sortie (16).

3. Réacteur selon la revendication 1 ou 2, caractérisé en ce que les moyens pour effectuer la séparation comprennent des moyens (25) conçus pour activer le processus de séparation lorsque, par suite de ladite croissance, l'expansion du lit fluidisé (14) atteint une limite d'alarme (AP) représentant une croissance excessive, afin de fournir un débit d'évacuation par l'orifice de purge (21) qui provoque, à l'intérieur de la colonne de séparation une vitesse de flux ascendant qui est inférieure à la vitesse de dépôt des particules de support partiellement dénudées mais supérieure à la vitesse de dépôt du matériau séparé, de manière que le matériau séparé soit entraîné à travers l'orifice de purge (21).

4. Réacteur selon la revendication 3, caractérisé en outre par des moyens conçus pour désactiver le processus de séparation lorsque, par suite de l'activité de séparation, le niveau du lit fluidisé tombe à une limite de sécurité prédéterminée (SP).

5. Réacteur selon l'une quelconque des revendications précédentes, caractérisé en ce que l'extrémité inférieure de la colonne de séparation (17) s'étend à l'intérieur même du lit fluidisé (14).

6. Réacteur selon l'une quelconque des revendications 1 à 4, caractérisé en ce que l'extrémité inférieure de la colonne de séparation (17) est située au-dessus du lit fluidisé (14) et en ce que des moyens sont prévus pour transférer les particules du lit fluidisé jusqu'à la colonne de séparation.

7. Réacteur selon la revendication 6, caractérisé en ce que les moyens de transfert sont conçus pour effectuer une action de séparation.

8. Réacteur selon la revendication 7, caractérisé en ce que les moyens de transfert comprennent une boucle principale (29) avec une pompe de transfert (30), pour soutirer les particules du lit fluidisé et amener ces particules à la colonne de séparation à un point haut.

9. Réacteur selon la revendication 8, caractérisé en outre par une boucle auxiliaire (36), comportant une deuxième pompe (38), conçue pour soutirer les particules au voisinage de l'extrémité inférieure de la colonne de séparation et pour renvoyer ces particules dans la colonne audit point haut, afin d'augmenter l'action de séparation.

10. Réacteur selon la revendication 7, caractérisé en ce que les moyens de transfert comprennent un tuyau faisant saillie, à partir d'un point de la colonne situé au voisinage de son extrémité inférieure, à l'intérieur du lit fluidisé, et des moyens pour injecter de l'air comprimé à l'intérieur de ce tuyau afin de forcer les particules à aller du lit dans la colonne à travers ledit tuyau.

11. Réacteur selon l'une quelconque des revendications précédentes, caractérisé en ce que les moyens pour effectuer la séparation sont constitués par un dispositif agitateur comprenant une hélice mélangeuse (19) entraînée par un moteur, opérant à l'intérieur de la partie inférieure de la colonne de séparation (17).

12. Réacteur selon l'une quelconque des revendications 1 à 10, caractérisé en ce que les moyens pour effectuer la séparation sont constitués par un dispositif agitateur comprenant un transducteur (28) disposé dans la colonne de séparation afin de produire une énergie sonique.

13. Réacteur selon l'une quelconque des revendications 1 à 10, caractérisé en ce que les moyens pour effectuer la séparation sont constitués par un dispositif agitateur disposé à l'extérieur de l'enceinte de réacteur (10) et qui est constitué par une boucle (29) incluant une pompe (30) pour soutirer les particules recouvertes de matériau cellulaire de la colonne (17) et pour renvoyer le matériau dans la colonne.

14. Réacteur selon la revendication 13, caractérisé en ce que ladite boucle comporte en outre un mélangeur statique (30A).

15. Réacteur selon la revendication 13 ou 14, caractérisé en ce que ladite boucle comporte en outre des moyens (29A) pour effectuer une séparation hydraulique.

16. Réacteur selon la revendication 13, caractérisé en outre par des moyens (32, 33) conçus pour injecter l'effluent dans ladite boucle (29) à partir d'une position située au-dessus du lit (14) lorsque le système est inactif, afin de la nettoyer.

17. Réacteur selon l'une quelconque des revendications précédentes, caractérisé en ce que l'extrémité inférieure de la colonne de séparation (17) comporte une partie conique (17A).

18. Réacteur selon l'une quelconque des revendications précédentes, caractérisé en ce qu'une vanne (23) est prévue sur l'orifice de purge (21) pour régler le débit à travers celui-ci.

19. Réacteur selon la revendication 18, caractérisé en ce que la vanne (23) est normalement fermée et en ce que sont prévus des moyens pour simultanément ouvrir cette valve et activer le processus de séparation lorsque, par suite de la croissance du matériau cellulaire à l'intérieur du lit fluidisé, l'expansion de ce derner atteint une limite d'alarme (AP) représentant une croissance excessive, afin de fournir un débit de sortie par l'orifice de purge qui provoque, dans la colonne de séparation (17), une vitesse de flux ascendant qui est inférieure à la vitesse de dépôt des particules de support partiellement dénudées, mais supérieure à la vitesse de dépôt du matériau séparé, de manière que le matériau séparé soit entraîné à travers l'orifice de purge, et des moyens conçus pour fermer ladite vanne et désactiver simultanément le processus de séparation lorsque, par suite de cette séparation, le niveau du lit atteint unelimite de sécurité (SP) située en -dessous de la limite d'alarme, terminant ainsi un cycle de retrait de la croissance en excès.

20. Réacteur selon la revendication 19, caractérisé en outre par un premier détecteur (24) pour engendrer une signal lorsque ladite limite d'alarme est atteinte et un second détecteur (27) pour engendrer une signal lorsque ladite limite de sécurité est atteinte, et des moyens de contrôle électronique (25) sensibles aux signaux des premier et second détecteurs pour effectuer automatiquement l'activation et la désactivation du processus de séparation et l'ouverture et la fermeture de la vanne (23).

21. Réacteur selon l'une quelconque des revendications précédentes, caractérisé en ce que l'orifice de purge (21) conduit le matériau séparé à une unité d'élimination de l'eau (22).

22. Réacteur selon l'une quelconque des revendications précédentes, caractérisé en ce que l'extrémité inférieure de la colonne de séparation (40) a un diamètre qui est inférieur à celui de son extrémité supérieure, de manière que si la vitesse ascendante à l'extrémité supérieure a une valeur que amène du matériau séparé ainsi que des particules de support à se déposer a l'intérieur de celle-ci, la vitesse à l'extrémité inférieure a une valeur supérieure afin d'empêcher le retour du matériau séparé à l'intérieur de l'enceinte de réacteur.

23. Réacteur selon la revendication 22, caractérisé en ce que ladite extrémité supérieure s'étend au-dessus du niveau de la sortie (16).

24. Réacteur selon la revendication 22, caractérisé en ce que ladite extrémité supérieure (A) est obturée et s'étend en-dessous du niveau de la sortie (16).

25. Réacteur selon la revendication 22 ou 23, caractérisé en ce que la colonne de séparation (40, 41) comprend en outre, entre l'extrémité inférieure (C) et l'extrémité supérieure (A), une section intermédiaire (B) qui a un diamètre de valeur intermédiaire.

26. Réacteur selon la revendication 25, caractérisé en ce que les moyens pour effectuer la séparation sont constitués par une boucle (29), comportant une pompe (30), qui s'étend entre la section intermédiaire et l'extrémité supérieure de la colonne de séparation (40) et qui est conçue pour soutirer de la section intermédiaire les particules de support ayant du matériau cellulaire en excès, afin de séparer lesdites particules et d'amener le mélange de matériau séparé et de particules de support partiellement dénudées à l'extrémité supérieure de la colonne.

27. Réacteur selon la revendication 25 ou 26, caractérisé en ce que la colonne de séparation (40) a une forme étagée afin de définir des sections distinctes d'extrémité inférieure (C), intermédiaire (B) et d'extrémité supérieure (A).

28. Réacteur selon la revendication 25 ou 26, caractérisé en ce que la colonne de séparation (41) a une forme conique dont le diamètre va en augmentant vers le haut, dont la portion inférieure constitue la section d'extrémité inférieure, dont la portion intermédiaire constitue la section intermédiaiare et dont la portion supérieure constitue la section d'extrémité supérieure.

29. Réacteur selon l'une quelconque des revendications 22 à 25, caractérisé en outre par une section de concentration (B) en forme d'entonnoir immergée dans le lit, les moyens de séparation etant constitués par une conduite (44), comportant une pompe (45), conçue pour soutirer, par la sortie de la section de concentration, les particules de support ayant une croissance excessive qui s'y sont déposées et les amener à la section d'extrémité supérieure de la colonne de séparation.

30. Réacteur selon la revendication 29, caractérisé en outre par une vanne (43) disposée dans la zone de sortie de la section de concentration (B), cette vanne étant conçue pour se fermer lorsque les moyens de séparation sont en fonctionnement, et pour s'ouvrir lorsqu'ils ne sont pas en fonctionnement afin de permettre un libre écoulement à travers la section de concentration.

31. Réacteur selon la revendication 30, caractérisé en outre par un détecteur de densité disposé dans la section de concentration et qui est conçu pour rendre actifs les moyens de séparation lorsque la densité détectée des particules qui se déposent dans la section de concentration atteint une valeur prédéterminée.

**Patentansprüche**

1. Fließbett-Reaktionsvorrichtung, in der Abwasser oder eine andere zu behandelnde bzw. zu verarbeitende Flüssigkeit mit einer den Fließbettzustand herbeiführenden Geschwindigkeit durch ein Bett (14) von Teilchen, die die Funktion eines Trägers für das Wachstum eines Materials bzw. Zellmaterials haben, hindurch nach oben geleitet wird, wobei oberhalb des Bettes eine Druckhöhe eines ausfließenden Mediums bzw. eines Effluenten entwickelt wird und wobei die Reaktionsvorrichtung einen das Bett (14) aufnehmenden Reaktionsbehälter (10) mit einem Einlaß (12), der so positioniert ist, daß er einem unteren Teil des Behälters zu behandelnde Flüssigkeit zuführt, und einem Auslaß (16) für die Entfernung von behandelter Flüssigkeit aus einem oberen Teil des Behälters aufweist, gekennzeichnet durch eine Regeleinrichtung für die Verhinderung der Ansammlung von überschüssigem Zellmaterial in der Reaktionsvorrichtung, wobei die Regeleinrichtung eine innerhalb des Reaktionsbehälters und mindestens teilweise oberhalb des Bettes (14) positionierte Absitz-bzw. Trennsäule (17), deren unteres Ende sich in Richtung auf das Bett oder in das Bett hinein erstreckt, wobei die Trennsäule eine Ablaßöffnung (21) aufweist, die sich von einer oberhalb des Bettes, jedoch unterhalb des Auslasses (16) befindlichen Stelle bis außerhalb des Reaktionsbehälters (10) erstreckt, und eine der Säule (17) zugeordnete bzw. dau hinzugefügte Einrichtung (18, 19, 20, 28, 29, 30), die dazu dient, ein Abscheren des überschüssigen Zellmaterials von den Teilchen zu bewirken, um in der Säule eine Mischung aus abgeschertem Material und teilweise von der Zellmaterialhülle befreiten Trägerteilchen herzustellen, wodurch die teilweise von dem Zellmaterial befreiten Teilchen zu dem Bett (14) zurückgeführt werden können, während das abgescherte Material durch die Ablaßöffnung (21) hindurch aus der Säule abgelassen wird, enthält.

2. Reaktionsvorrichtung nach Anspruch 1, dadurch gekennzeichnet, daß sich das obere Ender der Trennsäule (17) bis oberhalb des Auslasses (16) erstreckt.

3. Reaktionsvorrichtung nach Anspruch 1 oder 2, dadurch gekennzeichnet, daß die Einrichtung, die dazu dient, das Abscheren zu bewirken, eine Einrichtung (25) aufweise, die so angeordnet ist, daß sie den Abschervorgang aktiviert, wenn die Ausdehnung des Fließbettes (14) als Ergebnis des Wachstums eine übermäßiges Wachstum anzeigende Warn- bzw. Alarmgrenze (AP) erreicht, um an der Ablaß öffnung (21) eine Ausströmungsgeschwindigkeit zu erzeugen, die in der Trennsäule zu einer nach oben gerichteten Strömungsgeschwindigkeit führt, die niedriger als die Absetzgeschwindigkeit der teilweise von dem Zellmaterial befreiten Trägerteilchen, jedoch höher als die Absetzgeschwindigkeit das abgescherten Materials ist, wodurch das abgescherte Material durch die Ablaßöffnung (21) hindurch weggewaschen wird.

4. Reaktionsvorrichtung nach Anspruch 3, ferner gekennzeichnet durch eine Einrichtung, die so angeordnet ist, daß sie den Abschervorgang desaktiviert, wenn die Füllhöhe des Fließbettes als Ergebnis der Abscherwirkung bis zu einer vorbestimmten Sicherheitsgrenze (SP) fällt.

5. Reaktionsvorrichtung nach einem der vorhergehenden Ansprüche, dadurch gekennzeichnet, daß sich das untere Ende der Trennsäule (17) in das Fließbett (14) selbst erstreckt.

6. Reaktionsvorrichtung nach einem der Ansprüche 1 bis 4, dadurch gekennzeichnet, daß sich das untere Ende der Trennsäule (17) oberhalb des Fließbettes (14) befindet und daß eine Einrichtung vorgesehen ist, die dazu dient, die Teilchen aus dem Fließbett in die Trennsäule umzufüllen.

7. Reaktionsvorrichtung nach Anspruch 6, dadurch gekennzeichnet, daß die Umfülleinrichtung so angeordnet ist, daß sie die Abscherwirkung hervorruft.

8. Reaktionsvorrichtung nach Anspruch 7, dadurch gekennzeichnet, daß die Umfülleinrichtung eine Hauptschleife (29) mit einer Umfüllpumpe (30), die dazu dient, aus dem Fließbett Teilchen abzuziehen und diese Teilchen der Trennsäule an einer hochgelegenen Stelle zuzuführen, aufweist.

9. Reaktionsvorrichtung nach Anspruch 8, ferner gekennzeichnet durch eine Hilfsschleife (36) mit einer zweiten Pumpe (38), die so angeordnet ist, daß sie Teilchen aus dem an das untere Ende der Trennsäule angrenzenden Bereich abzieht und diese Teilchen an der hochgelegenen Stelle zu der Säule zurückführt, um die Abscherwirkung zu vergrößern.

10. Reaktionsvorrichtung nach Anspruch 7, dadurch gekennzeichnet, daß die Umfülleinrichtung ein Rohr, das von einer in der Säule befindlichen, dem unteren Ende der Säule benachbarten Stelle aus in das Fließbett hinein vorspringt, und eine Einrichtung, die dazu dient, in das Rohr Preßluft einzublasen, um Teilchen aus dem Bett durch das Rohr hindurch in die Säule hineinzutreiben, aufweist.

11. Reaktionsvorrichtung nach einem der vorhergehenden Ansprüche, dadurch gekennzeichnet, daß die Einrichtung, die dazu dient, das Abscheren zu bewirken, eine Rühranordnung ist, die eine(n) innerhalb des unteren Teils der Trennsäule (17) arbeitende(n) Mischschaufel (Mischflügel) (19) mit Motorantrieb aufweist.

12. Rekationsvorrichtung nach einem der Ansprüche 1 bis 10, dadurch gekennzeichnet, daß die Einrichtung, die dazu dient, das Abscheren zu bewirken, eine Rühranordnung ist, die einen in der Trennsäule angeordneten, zur Erzeugung von Schallenergie dienenden Wandler bzw. Energiewandler (28) aufweist.

13. Rekationsvorrichtung nach einem der Ansprüche 1 bis 10, dadurch gekennzeichnet, daß die Einrichtung, die dazu dient, das Abscheren zu bewirken, eine außerhalb des Reaktionsbehälters (10) angeordnete Rühranordnung ist, die durch eine Schleife (29) mit einer darin befindlichen Pumpe (30) gebildet wird und dazu dient, die mit Zellmaterial beschichteten Teilchen aus der Säule (17) abzuziehen und das Material zu der Säule zurückzuführen.

14. Reaktionsvorrichtung nach Anspruch 13, dadurch gekennzeichnet, daß die Schleife außerdem einen kontinuierlichen, statischen (Flüssigkeits) mischer (30A) aufweist.

15. Reaktionsvorrichtung nach Anspruch 13 oder 14, dadurch gekennzeichnet, daß die Schleife außerdem eine Einrichtung (29A) aufweist, die dazu dient, ein hydraulisches Abscheren zu bewirken.

16. Reaktionsvorrichtung nach Anspruch 13, ferner gekennzeichnet durch eine Einrichtung (32, 33), die so angeordnet ist, daß sie aus einer oberhalb des Bettes (14) befindlichen Stelle ausfließendes Medium in die Schleife (29) einspritzt bzw. injiziert, um die Schleife zu reinigen, wenn die Regeleinrichtung inaktiv bzw. außer Betrieb ist.

17. Reaktionsvorrichtung nach einem der vorhergehenden Ansprüche, dadurch gekennzeichnet, daß das untere Ende der Trennsäule (17) einen konischen bzw. kegelförmigen Teil (17A) aufweist.

18. Reaktionsvorrichtung nach einem der vorhergehenden Ansprüche, dadurch gekennzeichnet, daß in der Ablaßöffnung (21) ein Ventil (23) vorgesehen ist, das dazu dient, die Strömungsgeschwindigkeit des durch die Ablaßöffnung hindurchströmenden, abgescherten Materials einzustellen.

19. Reaktionsvorrichtung nach Anspruch 18, dadurch gekennzeichnet, daß das Ventil (23) normalerweise geschlossen ist, daß eine Einrichtung vorgesehen ist, die dazu dient, gleichzeitig das Ventil zu öffnen und den Abschervorgang zu aktivieren, wenn die Ausdehnung des Fließbettes als Ergebnis des Wachstums des darin befindlichen Zellmaterials eine übermäßiges Wachstum anzeigende Warn- bzw. Alarmgrenze (AP) erreicht, um an der Auslaßöffnung eine Ausströmungsgeschwindigkeit zu erzeugen, die in der Trennsäule (17) zu einer nach oben gerichteten Strömungsgeschwindigkeit führt, die niedriger als die Absetzgeschwindigkeit der teilweise von der Zellmaterialhülle befreiten Trägerteilchen, jedoch höher als die Absetzgeschwindigkeit des abgescherten Materials ist, wodurch das abgescherte Material durch die Ablaßöffnung hindurch weggewaschen wird, und daß eine Einrichtung vorgesehen ist, die so angeordnet ist, daß sie das Ventil schließt und gleichzeitig den Abschervorgang desaktiviert, wenn die Füllhöhe des Bettes als Ergebnis des Abscherens eine unterhalb der Alarmgrenze liegende Sicherheitsgrenze (SP) erreicht, wodurch ein Zyklus der Entfernung von überschüssigen gewachsenem Material abgeschlossen bzw. beendet wird.

20. Reaktionsvorrichtung nach Anspruch 19, ferner gekennzeichnet durch einen ersten Meßfühler (24), der dazu dient, ein Signal zu erzeugen, wenn die Alarmgrenze erreicht ist, einen zweiten Meßfühler (27), der dazu dient, ein Signal zu erzeugen, wenn die Sicherheitsgrenze erreicht ist, und eine elektronische Regeleinrichtung (25), die auf die Signale von dem ersten und dem zweiten Meßfühler anspricht und dazu dient, die Aktivierung und Desaktivierung des Abschervorgangs und das Öffnen und Schließen des Ventils (23) selbsttätig zu bewirken.

21. Reaktionsvorrichtung nach einem der vorhergehenden Ansprüche, dadurch gekennzeichnet, daß die Ablaßöffnung (21) einer Entwässerungseinheit (22) abgeschertes Material zuführt.

22. Reaktionsvorrichtung nach einem der vorhergehenden Ansprüche, dadurch gekennzeichnet, daß das untere Ende der Trennsäule (4) einen Durchmesser hat, der kleiner als der Durchmesser des oberen Endes ist, wodurch in dem Fall, daß die nach oben gerichtete Geschwindigkeit im oberen Ende einen Wert hat, der dazu führt, daß sich etwas abgeschertes Material ebenso wie Trägerteilchen darin absetzt, die Geschwindigkeit im unteren Ende einen höheren Wert hat, um zu verhindern, daß sich dieses abgescherte Material in den Reaktionsbehälter zurückbewegt.

23. Reaktionsvorrichtung nach Anspruch 22, dadurch gekennzeichnet, daß sich das obere Ende bis oberhalb des Niveaus des Auslasses (16) bzw. über dieses Niveau hinaus erstreckt.

24. Reaktionsvorrichtung nach Anspruch 22, dadurch gekennzeichnet, daß das obere Ende (A) abgedeckt ist und unterhalb des Niveaus des Auslasses (16) liegt.

25. Reaktionsvorrichtung nach Anspruch 22 oder 23, dadurch gekennzeichnet, daß die Trennsäule (40, 41) außerdem einen zwischen dem unteren Ende (C) und dem oberen Ende (A) liegenden Abschnitt (B), dessen Durchmesser einen Zwischenwert hat, aufweist.

26. Reaktionsvorrichtung nach Anspruch 25, dadurch gekennzeichnet, daß die Einrichtung, die dazu dient, das Abscheren zu bewirken, durch eine Schleife (29) gebildet wird, in der sich eine Pumpe (30) befindet und die sich zwischen dem Zwischenabschnitt und dem oberen Ende der Trennsäule (40) erstreckt, so angeordnet ist, daß die Trägerteilchen mit überschüssigem Zellmaterial aus dem Zwischenabschnitt abzieht und dazu dient, diese Teilchen abzuscheren und die Mischung aus abgeschertem Material und teilweise von dem Zellmaterial befreiten Trägerteilchen in das obere Ende der Säule einzuführen.

27. Reaktionsvorrichtung nach Anspruch 25 oder 26, dadurch gekennzeichnet, daß die Trennsäule (40) einen abgestuften Aufbau hat, wobei ein unterer Endabschnitt (C), ein Zwischenabschnitt (B) und ein oberer Endabschnitt (A) einzeln festgelegt werden.

28. Reaktionsvorrichtung nach Anspruch 25 oder 26, dadurch gekennzeichnet, daß die Trennsäule (41) einen konischen bzw. kegelförmigen Aufbau mit einem sich nach oben vergrößerden Durchmesser hat, dessen unterer Teil als unterer Endabschnitt, dessen in der Mitte liegender Teil als Zeischenabschnitt und dessen oberer Teil als oberer Endabschnitt dient.

29. Reaktionsvorrichtung nach einem der Ansprüche 22 bis 25, ferner gekennzeichnet durch einen in das Bett eingetauchten Eindickabschnitt (B) mit tricherförmigem Aufbau, wobei die Abschereinrichtung durch eine Leitung (44) gebildet wird, die eine Pumpe (45) aufweist und so angeordnet ist, daß sie Trägerteilchen, in denen sich überschüssiges, gewachsenes Material befindet und die sich in dem Eindickabschnitt abgesetzt haben, aus dessen Auslaß in den oberen Endabschnitt der Trennsäule hinein abzieht.

30. Reaktionsvorrichtung nach Anspruch 29, ferner gekennzeichnet durch eine im Auslaßbereich des Eindickabschnitts (B) befindiches Ventil (43), das so angeordnet ist, daß es sich schließt, wenn die Abschereinrichtung in Betrieb ist, und daß es sich öffnet, wenn die Abschereinrichtung nicht in Betrieb ist, um eine freie Strömung durch den Eindickabschnitt zu ermöglichen.

31. Reaktionsvorrichtung nach Anspruch 30, ferner gekennzeichnet durch einen Dichte-Meßführer, der in den Eindickabschnitt angeordnet und so eingerichtet ist, daß er die Abschereinrichtung in Betrieb setzt, wenn die ermittelte Dichte der Teilchen, die sich in dem Eindickabschnitt abgesetzt haben, einen vorbestimmten Wert erreicht.

**0 007 783**

Fig.1.

ELECTRONIC CONTROL UNIT — 25

S — 26

DEWATERING UNIT — 22

20
18
17
15
16
CLEAR EFFLUENT
21
23
24 S AP 19
27 S SP
FLUIDIZED BED
REACTOR
10
14
13
WASTE WATER
12 11

Fig.2.

OPEN
21
23
20
18
17
16
10
24 S AP 19
27 S SP
14

Fig.3.

CLOSED
21
23
20
18
17
15
16
10
24 S AP 19
27 SP S
14

1

Fig. 4.

Fig. 5.

Fig. 6.

Fig.7.

Fig.8.

Fig.9.

Fig.10.

Fig.11.

4

Fig. 12.

Fig. 13.

Fig. 14.